**Europäisches Patentamt**

**European Patent Office**

**Office européen des brevets**

(11) Publication number: **0 120 593**

**B1**

## (12) EUROPEAN PATENT SPECIFICATION

(45) Date of publication of patent specification: **19.04.89**

(51) Int. Cl.⁴: **G 05 D 16/20, F 15 B 5/00**

(21) Application number: **84301085.1**

(22) Date of filing: **20.02.84**

(54) Electro-pneumatic control systems.

(30) Priority: **22.02.83 US 468105**

(43) Date of publication of application:
**03.10.84 Bulletin 84/40**

(45) Publication of the grant of the patent:
**19.04.89 Bulletin 89/16**

(84) Designated Contracting States:
**DE FR GB IT**

(56) References cited:
**WO-A-80/01826**
**DE-A-1 935 110**
**US-A-3 819 960**
**US-A-4 124 811**

(73) Proprietor: **THE BABCOCK & WILCOX COMPANY**
**1010 Common Street P.O. Box 60035**
**New Orleans Louisiana 70160 (US)**

(72) Inventor: **Smith, Jane E.**
**8030 Deepwood Boulevard, H16**
**Mentor Ohio 44060 (US)**
Inventor: **Whitford, Rowland E.**
**6230 Painesville-Ravenna Road**
**Painesville Ohio 44077 (US)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to electro-pneumatic control systems and, more particularly, but not exclusively, to the control of electro-pneumatic converters.

Electro-pneumatic converters are known wherein a 4 to 20 mA electrical signal is used to actuate a solenoid-like motor. The 4 to 20 mA electrical signal causes a proportionate displacement in a core of the solenoid-like motor, which displacement is used to control an associated valve producing a pressure change proportional to the motion of the core. An example of such a device may be found in US Patent No. US—A—3 334 642 (Borthwick).

There are certain disadvantages to such known electro-pneumatic control systems. Firstly, they are unable to hold positions on loss of power. Should power be removed from the coil, the core moves back to a position where it is in equilibrium. This causes the pneumatic output signal to go off scale, resulting in movement of control devices to fully-opened or fully-closed position, which may be catastrophic in certain control systems. Secondly, such known electro-pneumatic converters are vibration sensitive. Since the cores are suspended from springs which act as range and zero limiters, vibration of the core causes a variation in the pneumatic output signal.

PCT Patent Application Publication No. WO 80/01826 discloses a closed loop-electro-pneumatic control system, the system comprising:

a movable restriction means provided in a pneumatic line for variably restricting said pneumatic line;

pneumatic output generating means for providing a pneumatic output which varies in response to movement of the movable restriction means,

actuating means for causing movement of the movable restriction means in response to a control signal so as to vary the pneumatic output of the pneumatic output generating means;

means for establishing a feedback signal indicative of an actual pneumatic output of the pneumatic output generating means; and

combining means for comparing an electrical set point signal indicative of a desired pneumatic output signal with the feedback signal to establish said control signal for the actuating means.

The present invention provides a closed-loop electro-pneumatic control system as just defined, the system being characterised by:

a rotationally movable DC motor connected between the actuating means and the restriction means, the actuating means being operative to actuate the DC motor in accordance with the control signal to cause the motor to rotate so as to move the restriction means;

means for establishing said set point signal in response to the electrical input signal; and

a dual power supply operative to provide a pair of positive voltage sources to power the motor actuating means and the combining means to provide bi-directional rotation of the DC motor without a negative power supply.

A preferred embodiment of the present invention described hereinbelow overcomes or at least alleviates the above-mentioned problems of known electro-pneumatic converters by providing an electro-pneumatic converter which is dependent upon a direct current (DC) motor to provide a variable restriction to a pneumatic nozzle, thereby providing a fail-safe device which will maintain the last desired signal to the pneumatic assembly upon a loss of electrical power, and which is insensitive to vibration. The preferred electro-pneumatic converter utilises a DC motor which is driven by a 4 to 20 mA input signal to provide a variable restriction to a pneumatic backpressure device by way of a cam, thus allowing the pneumatic device to produce a 20.7 to 103.4 kPa (3 to 15 lbf/in$^2$ or "psi") pneumatic output signal corresponding to the 4 to 20 mA input signal. The DC motor rotation is provided by an error signal between a set point signal determined by the 4 to 20 mA electrical input and a feedback signal of the corresponding 20.7 to 103.4 kPa (3 to 15 lbf/in$^2$) pneumatic output signal as sensed by a pressure transducer. The power supply used in producing the error signal is biassed up to a reference voltage around which the error signal is referenced to thereby provide bi-directional DC motor rotation in response to positive voltage signals referenced below or above this reference voltage. More specifically, the power supply has two positive voltage sources with reference to common.

Advantages of the preferred electro-pneumatic control system are that it will maintain the last pneumatic output signal upon a loss of electric power, that it is insensitive to vibration of the electric motive means, that it has a biassed power supply that is able to provide bi-directional motor rotation without using a positive and negative voltage, and that the electro-pneumatic converter can operate from a two-wire process control loop (4 to 20 mA) without a power supply of its own.

The invention will now be further described, by way of illustrative and non-limiting example, with reference to the accompanying drawings, in which:

Figure 1 is a functional block diagram of an electro-pneumatic control system embodying the present invention;

Figure 1a is an expanded view of a motor-driven cam and backpressure nozzle of a mechanical servo assembly of the system of Figure 1; and

Figure 2 is a schematic electrical circuit of the Figure 1 functional block diagram.

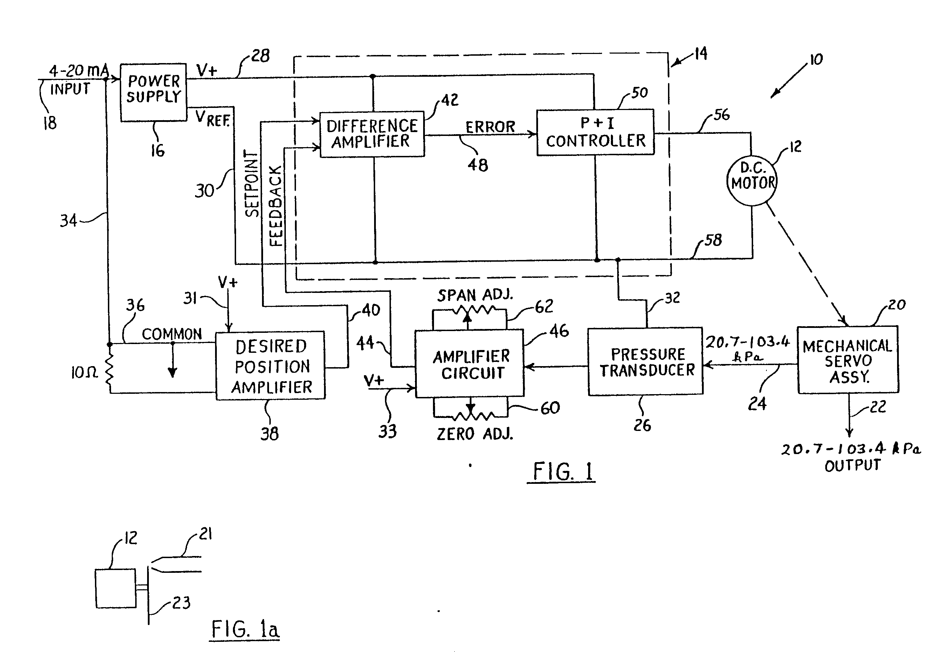

Referring to the drawings, Figures 1 and 1a show an electro-pneumatic control system 10 wherein a DC motor 12 is controlled by a motor servo circuit 14 which is powered by a power supply 16 operated from a 4 to 20 mA input control signal connected to the power supply 16 along a line 18. The DC motor 12 is mechanically constrained to a mechanical servo assembly 20 which has a backpressure nozzle 21 variably restricted by a cam 23 driven by the DC motor 12 to thus provide a variable backpressure output along an output line 22 normally in a 20.7 to 103.4 kPa (3 to 15 lbf/in$^2$) output range. This 20.7 to 103.4 kPa (3 to 15 lbf/in$^2$) output is linear and corresponds to the linear 4 to 20 mA electrical input provided along the input line 18. The same 20.7 to 103.4 kPa (3 to 15 lbf/in$^2$) output is also sent along a line 24 to a pressure transducer 26 which provides a feedback signal used in determining control of the DC motor 12 as will be described more fully hereinbelow.

To allow the DC motor 12 to be operated bidirectionally without the need for dual polarity voltages, the power supply 16 establishes dual voltages V+ and $V_{ref}$ along power lines 28 and 30, respectively. The V+ voltage is in the range of 6.4 volts nominal and powers the motor servo circuit 14, as well as powering a desired position amplifier 38 and an amplifier circuit 46 along input lines 31 and 33, respectively. The $V_{ref}$ voltage from the power supply 16 is transmitted along the line 30 to bias up the motor servo circuitry 14 and to power the pressure transducer 26 along a line 32.

To establish a set point from the 4 to 20 mA input signal to which the appropriate 20.7 to 103.4 kPa (3 to 15 lbf/in$^2$) output will have to be supplied from the output line 22, the particular electrical input signal is sent along a line 34 to a 10 ohm precision resistor located between the circuit common at a line 36 and an input to the desired position amplifier 38. The precision 10 ohm resistor senses the particular current level and establishes a voltage drop across itself. That voltage drop provides a counterpart voltage input to the position amplifier 38. The position amplifier 38 raises the input signal level to a predetermined level and sends it along a line 40 to a difference amplifier 42 as a set point signal compatible with the level of a feedback signal also provided to the difference amplifier 42. The difference amplifier 42 is the first stage of the motor servo circuit 14. The second input to the difference amplifier 42 is the feedback signal, which is provided on a line 44 from the amplifier circuit 46 which scales and zeroes the pressure signal provided by the pressure transducer 26, which acts as a pneumatic-to-electric converter for the 20.7 to 103.4 kPa (3 to 15 lbf/in$^2$) output signal established at the output line 22.

The difference amplifier 42 senses any deviation of the feedback signal on the line 44 from the established set point signal on the line 40 and establishes an error signal on a line 48, which error signal is an amplified difference signal so long as such difference between the set point signal and feedback signal is maintained. The amplified error signal is supplied to an input of a proportional and integral (P&I) controller 50, where it is integrated and scaled up or down with respect to $V_{ref}$.

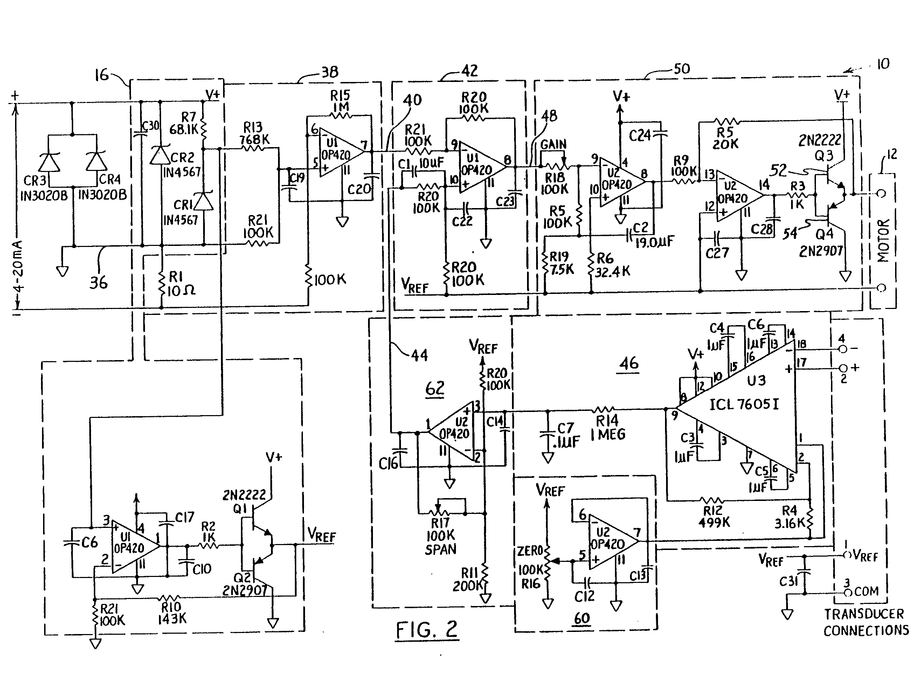

As may be best seen with particular reference to Figure 2, the proportional plus integral controller 50 comprises a pair of driver transistors 52 and 54 in complementary-symmetry configuration, which transistors are respectively NPN and PNP thereby allowing either sourcing or sinking of the current signal to the motor 12 along a line 56. The positive terminal of the motor 12 is thus connected to the line 56 while its negative terminal is connected along a line 58 to the voltage reference $V_{ref}$ on the line 30.

Thus, bi-directional rotation of the motor 12 is achieved by the voltage output of the proportional plus integral controller 50 rising or falling below the voltage reference $V_{ref}$. When the output signal is above the voltage reference $V_{ref}$, the NPN transistor 52 of the proportional plus integral controller 50 sources current. This current through the motor 12 will dictate the speed response of the motor 12 with critical damping due to the integral action of the controller 50. As the voltage differential decreases, the current drawn by the motor 12 and the speed of the motor also decrease. When the voltage output of the proportional plus integral controller 50 is equal to $V_{ref}$, no current flows through the motor 12. If the output voltage drops below $V_{ref}$, the direction of rotation of the motor will reverse due to the voltage level applied to it crossing the $V_{ref}$ point. This crossing of the voltage level causes the PNP transistor 54 of the proportional plus integral controller 50 to sink current.

As shown in particular in Figure 1, the amplifier circuit 46 has both a zero adjustment 60 and a span adjustment 62. The zero and span adjustments 60 and 62 allow the feedback signal to be adjusted to respond over a variety of ranges. The predominant pressure range and pressure starting or zero point that the feedback will be adjusted for is the 20.7 to 103.4 kPa (3 to 15 lbf/in$^2$) signal, which is a standard for pneumatic instrumentation as 4 to 20 mA is a standard for electrical instrumentation. Other ranges are also available and may be set, including any 50 per cent split range desired (i.e. 0 per cent is 20.7 kPa (3 lbf/in$^2$) and 100 per cent is 62.1 kPa (9 lbf/in$^2$)).

As will thus be seen, should an electrical failure occur in the system, the DC motor 12 would stop. However, the cam 23 that it drives would remain in its last position providing the same backpressure restriction from the nozzle 21 to the mechanical servo assembly 20 and the last conforming pressure output signal are maintained along the output line 22. Also, since the motor servo circuit 14 is biassed up by the voltage reference $V_{ref}$ the need for a negative power supply to provide bi-directional rotation of the motor 12 is obviated.

**Claims**

1. A closed-loop electro-pneumatic control system (10), the system comprising:
a movable restriction means (23) provided in a pneumatic line for variably restricting said pneumatic line;

pneumatic output generating means (20) for providing a pneumatic output which varies in response to movement of the movable restriction means;

actuating means (50) for causing movement of the movable restriction means (23) in response to a control signal (48) so as to vary the pneumatic output of the pneumatic output generating means;

means (26, 46) for establishing a feedback signal (44) indicative of an actual pneumatic output of the pneumatic output generating means (20); and

combining means (42) for comparing an electrical set point signal (40) indicative of a desired pneumatic output signal with the feedback signal (44) to establish said control signal (48) for the actuating means (50);

characterised by:

a rotationally movable DC motor (12) connected between the actuating means (50) and the restriction means (23), the actuating means (50) being operative to actuate the DC motor (12) in accordance with the control signal (48) to cause the motor to rotate so as to move the restriction means (23);

means for establishing said set point signal (40) in response to an electrical input signal (18); and

a dual power supply (16) operative to provide a pair of positive voltage sources to power the motor actuating means (50) and the combining means (42) to provide bi-directional rotation of the DC motor (12) without a negative power supply.

2. A control system according to claim 1, wherein the power supply (16) is connected to be driven by the electrical input signal (18).

3. A control system according to claim 1 or claim 2, wherein the feedback establishing means (26, 46) comprises a pressure transmitter (26) connected to the pneumatic output generating means (20) to measure the pneumatic output therefrom and establish an electrical signal representative thereof.

4. A control system according to claim 3, wherein the feedback establishing means (26, 46) includes an amplifier circuit (46) having a span and zero adjustment (62, 60) to allow the pneumatic output from the pneumatic output generating means (20) to be scaled to a desired range of output pressures from a desired starting pressure.

5. A control system according to claim 4, wherein the combining means (42) comprises a difference amplifier (42) having a first input connected to receive the set point signal (40) from the set point signal establishing means and a second input connected to the amplifier circuit (46) to receive the feedback signal (44), the difference amplifier (42) being operative to derive an error signal representative of any difference between the signals applied to its first and second inputs and to amplify the error signal to provide said control signal (48) for the motor actuating means (50).

6. A control system according to claim 5, wherein one of the pair of positive voltage sources provided by the dual power supply (16) is a voltage reference source ($V_{ref}$) and the difference amplifier (42) is operative to establish said amplified error signal (48) with respect to the voltage reference source ($V_{ref}$).

7. A control system according to claim 6, wherein the motor actuating means (50) includes an NPN transistor (52) series connected to a PNP transistor (54) to allow respective sourcing and sinking of current to the DC motor (12) depending on the error signal from the difference amplifier (42) being above or below the voltage reference source ($V_{ref}$) to thereby provide bi-directional rotation to the DC motor (12).

8. A control system according to claim 7, wherein the DC motor (12) has a positive terminal connected to an output of the PNP transistor (54) of the motor actuating means (50) and a negative terminal connected to the voltage reference source ($V_{ref}$).

9. A control system according to claim 8, wherein the set point establishing means includes a precision resistor connected to receive the electric input signal to establish a voltage thereacross depending upon the value of the electric input signal and connected to a desired position amplifier (38) for amplifying the signal to a level usable by the difference amplifier (42) of the combining means.

10. A control system according to any one of the preceding claims, wherein the restriction means (23) comprises a cam connected to the DC motor (12) for variably restricting the pneumatic output generating means (20) depending upon the position of the cam.

**Patentansprüche**

1. Geschlossenes elektropneumatisches Regelsystem (10) mit:

einer bewegbaren Drosseleinrichtung (23), welche in einer Druckleitung zum variablen Drosseln der Druckleitung vorgesehen ist;

einer Ausgangsdruckerzeugungseinrichtung (20), zum Vorsehen eines Ausgangsdruckes, welcher sich unter Ansprechen auf die Bewegung der bewegbaren Drosseleinrichtung verändert;

einer Betätigungseinrichtung (50) um eine Bewegung der bewegbaren Drosseleinrichtung (23) unter Ansprechen auf ein Steuersignal (48) zu veranlassen, um so den Ausgangsdruck der Ausgangsdruckerzeugungseinrichtung zu verändern;

einer Einrichtung (26, 46) zum Hervorbringen eines Rückkopplungssignales (44), welches eine Anzeige für den aktuellen Ausgangsdruck der Ausgangsdruckerzeugungseinrichtung (20) ist; und

einer Verknüpfungseinrichtung (42), zum Vergleich eines elektrischen Sollwertsignales (40), welches eine Anzeige für ein gewünschtes Druckausgangssignal ist, mit dem Rückkopplungssignal (44), um das Steuersignal (48) für die Betätigungseinrichtung (50) zu erzeugen;

gekennzeichnet durch:

einen drehbar beweglichen Gleichstrommotor (12), welcher zwischen der Betätigungseinrichtung (50) und der Drosseleinrichtung (23) angeschlossen ist, wobei die Betätigungseinrichtung (50) im Betrieb den Gleichstrommotor (12) entsprechend dem Steuersignal (48) betätigt, um zu bewirken, daß der Motor sich dreht, so daß die Drosseleinrichtung (23) bewegt wird;

eine Einrichtung zum Bereitstellen des Sollwertsignales (40) unter Ansprechen auf ein elektrisches Eingangssignal (18); und

eine doppelte Stromversorgung (16), welche im Betrieb ein Paar von positiven Spannungsquellen vorsehen kann, um die Motorbetätigungseinrichtung (50) und die Verknüpfungseinrichtung (42) mit Energie zu versorgen, um eine Drehung des Gleichstrommotors (12) in beide Richtungen ohne eine negative Strom/Spannungsversorgung vorzusehen.

2. Kontrollsystem nach Anspruch 1, wobei die Stromversorgung (16) so angeschlossen ist, daß sie durch das elektrische Eingangssignal (18) getrieben wird.

3. Regelsystem nach Anspruch 1 oder 2, wobei die Einrichtung (26, 46) zur Erzeugung eines Rückkopplungssignals einen Drücküberträger (26) aufweist, welcher an die Ausgangsdruckerzeugungseinrichtung (20) angeschlossen ist, um den Ausgangsdruck von dort zu messen und ein diesem entsprechendes elektrisches Signal bereitzustellen.

4. Regelsystem nach Anspruch 3, wobei die Einrichtung (26, 46) zur Erzeugung einer Rückkopplung einen Verstärkerkreis (46) enthält, welcher eine Bereichs- wie eine Nulleinstellung (62, 60) aufweist, um zu ermöglichen, daß der Ausgangsdruck an der Ausgangsdruckerzeugungseinrichtung (20) ausgehende von einem gewünschten Anfangsdruck in einem gewünschten Bereich von Ausgangsdrücken maßstäblich geändert wird.

5. Regelsystem nach Anspruch 4, wobei die Verknüpfungseinrichtung (42) einen Differenzverstärker (42) aufweist, welcher einen ersten Eingang hat, der so angeschlossen ist, daß er das Sollwertsignal (40) von der Sollwertsignalerzeugungseinrichtung aufnimmt, sowie einen zweiten Eingang hat, welcher mit dem Verstärkerkreis (46) verbunden ist, so daß er das Rückkopplungssignal (44) aufnimmt, wobei der Differenzverstärker (42) so betreibbar ist, daß er ein Fehlersignal ableitet, welches einer beliebigen Differenz zwischen den an seinem ersten und seinem zweiten Eingang anliegenden Signalen entspricht, und das Fehlersignal verstärkt, um das Steuersignal (48) für die Motorbetätigungseinrichtung (50) bereitzustellen.

6. Regelsystem nach Anspruch 5, wobei eine von dem Paar positiver Spannungsquellen, welche durch die zweifache Stromversorgung (16) vorgesehen sind, eine Spannungsreferenzquelle (V$_{ref}$) ist, und der Differenzverstärker (42) so betreibbar ist, daß er das verstärkte Fehlersignal (48) in Bezug auf die Referenzspannungsquelle (V$_{ref}$) erzeugt.

7. Regelsystem nach Anspruch 6, wobei die Motorbetätigungseinrichtung (50) einen NPN-Transistor (52) enthält, welcher in Reihe mit einem PNP-Transistor (54) geschaltet ist, um die jeweilige Zufuhr und Absenkung von Strom zu dem Gleichspannungsmotor (12) in Abhängigkeit von dem Fehlersignal von dem Differenzverstärker (42) zu erlauben, welches über oder unter der Referenzspannungsquelle (V$_{ref}$) liegt, um dadurch die Drehung des Gleichstrommotors (12) in beide Richtungen vorzusehen.

8. Regelsystem nach Anspruch 7, wobei der Gleichstrommotor (12) ein einen positiven Anschluß hat, welcher an einen Ausgang des PNP-Transistors (54) der Motorbetätigungseinrichtung (50) angeschlossen ist, sowie einen negativen Anschluß, welcher an die Referenzspannungsquelle (V$_{ref}$) angeschlossen ist.

9. Regelsystem nach Anspruch 8, wobei die Einrichtung zur Erzeugung eines Sollwertes einen Präzisionswiderstand enthält, welcher so geschaltet ist, daß er das Eingangssignal aufnimmt, um einen Spannungsabfall über den Widerstand hervorzurufen, welcher vom Wert des elektrischen Eingangssignales abhängt und auf einen Verstärker (38) für die gewünschte Position geschaltet wird, zum Verstärken des Signales auf ein Niveau, welches von dem Differenzverstärker (42) der Verknüpfungseinrichtung verwendet werden kann.

10. Regelsystem nach einem der vorstehenden Ansprüche, wobei die Drosseleinrichtung (23) einen Nocken aufweist, welcher an den Gleichstrommotor (12) angeschlossen ist, um die Ausgangsdruckerzeugungseinrichtung (20) in Abhängigkeit von der Stellung des Nockens variabel zu drosseln.

**Revendications**

1. Système de commande électro-pneumatique à boucle fermée (10), comportant:

un moyen d'étranglement mobile (23) prévu dans une canalisation pneumatique en vue d'étrangler de façon variable ladite canalisation pneumatique;

un moyen de génération (20) de signal de sortie pneumatique en vue de fournir une sortie pneumatique variant en réponse à un déplacement du moyen d'étranglement mobile;

un moyen de manoeuvre (50) pour provoquer un déplacement du moyen d'étranglement mobile (23) en réponse à un signal de commande (48) de façon à faire varier la sortie pneumatique du moyen de génération de signal de sortie pneumatique;

un moyen (26, 46) en vue d'établir un signal de contre-réaction (44) représentatif d'un signal de sortie pneumatique réel du moyen de génération (20) de signal de sortie pneumatique;

un moyen de combinaison (42) en vue de comparer un signal de point de consigne électrique (40) représentatif d'un signal de sortie pneumatique désiré au signal de contre-réaction (44) pour établir ledit signal de commande (48) pour le moyen de manoeuvre (50);

caractérisé par:

un moteur à courant continu (12) déplaçable en rotation connecté entre le moyen de manoeuvre (50) et le moyen d'étranglement (23), le moyen de manoeuvre (50) agissant pour actionner le moteur à courant continu (12) conformément au signal de commande (48) pour faire tourner le moteur de façon à déplacer le moyen d'étranglement (23);

un moyen en vue d'établir ledit signal de point de consigne (40) en réponse à un signal d'entrée électrique (18); et

une alimentation double (16) délivrant deux sources de tension positive pour alimenter le moyen de manoeuvre (50) du moteur et le moyen de combinaison (42) pour assurer une rotation dans les deux sens du moteur à courant continu (12) sans recourir à une alimentation négative.

2. Système de commande selon la revendication 1, dans lequel l'alimentation (16) est connectée pour être commandée par le signal d'entrée électrique (18).

3. Système de commande selon la revendication 1 ou la revendication 2, dans lequel le moyen (26, 46) d'établissement de la contre-réaction comporte un transmetteur de pression (26) connecté au moyen de génération (20) de signal de sortie pneumatique pour mesurer la sortie pneumatique de celui-ci et établir un signal électrique représentatif de celui-ci.

4. Système de commande selon la revendication 3, dans lequel le moyen (26, 46) d'établissement de la contre-réaction comprend un circuit amplificateur (46) possédant un réglage de plage et de zéro (62, 60) pour permettre à la sortie pneumatique du moyen de génération (20) de signal de sortie pneumatique d'être étalonnée à une plage désirée de pressions de sortie à partir d'une pression de départ désirée.

5. Système de commande selon la revendication 4, dans lequel le moyen de combinaison (42) comporte un amplificateur différentiel (42) possédant une première entrée connectée pour recevoir le signal de point de consigne (40) provenant du moyen d'établissement du signal de point de consigne et une seconde entrée connectée au circuit amplificateur (46) pour recevoir le signal de contre-réaction (44), l'amplificateur différentiel (42) agissant pour prélever un signal d'erreur représentatif d'une différence quelconque entre les signaux appliqués à ses première et seconde entrées et pour amplifier le signal d'erreur pour délivrer ledit signal de commande (48) pour le moyen de manoeuvre (50) du moteur.

6. Système de commande selon la revendication 5, dans lequel une des deux sources de tension positive délivrée par l'alimentation double (16) est une source de tension de référence ($V_{ref}$) et l'amplificateur différentiel (42) agit pour établir ledit signal d'erreur amplifié (48) par rapport à la source de tension de référence ($V_{ref}$).

7. Système de commande selon la revendication 6, dans lequel le moyen de manoeuvre du moteur (50) comprend un transistor NPN (52) connecté en série à un transistor PNP (54) pour permettre un accroissement et une diminution respectifs de courant au moteur à courant continu (12) selon le signal d'erreur provenant de l'amplificateur différentiel (42) se trouvant au-dessus ou au-dessous de la source de tension de référence ($V_{ref}$) pour ainsi assurer une rotation dans les deux dens du moteur à courant continue (12).

8. Système de commande selon la revendication 7, dans lequel le moteur à courant continu (12) possède une borne positive connectée à une sortie du transistor PNP (54) du moyen de manoeuvre de moteur (50) et une borne négative connectée à la source de tension de référence ($V_{ref}$).

9. Système de commande selon la revendication 8, dans lequel le moyen d'établissement de point de consigne comprend une résistance de précision connectée pour recevoir le signal d'entrée électrique en vue d'établir une tension à ses bornes selon la valeur du signal d'entrée électrique et connectée à un amplificateur de position désirée (38) pour amplifier le signal à un niveau utilisable par l'amplificateur différentiel (42) du moyen de combinaison.

10. Système de commande selon l'une quelconque des revendications précédentes, dans lequel le moyen d'étranglement (23) comporte une came reliée au moteur à courant continu (12) pour étrangler de façon variable le moyen de génération (20) de signal de sortie pneumatique selon la position de la came.

FIG. 1

FIG. 1a

EP 0 120 593 B1

FIG. 2

TRANSDUCER CONNECTIONS

MOTOR

4-20mA